# EUROPÄISCHE PATENTSCHRIFT

(11) **EP 3 940 692 B1**
(45) Veröffentlichungstag und Bekanntmachung des Hinweises auf die Patenterteilung: **05.04.2023**
(21) Anmeldenummer: 20187321.3
(22) Anmeldetag: 23.07.2020
(51) Int. Cl.: G10L 13/02, G10L 15/25, G06K 9/00

(54) **VERFAHREN ZUM AUTOMATISCHEN LIPPENLESEN MITTELS EINER FUNKTIONSKOMPONENTE UND ZUM BEREITSTELLEN DER FUNKTIONSKOMPONENTE**
METHOD FOR AUTOMATIC LIP READING USING A FUNCTIONAL COMPONENT AND PROVIDING THE FUNCTIONAL COMPONENT
PROCÉDÉ DE LECTURE LABIALE AUTOMATIQUE AU MOYEN D'UN COMPOSANT FONCTIONNEL ET DE FOURNITURE DU COMPOSANT FONCTIONNEL

(30) Priorität: 17.07.2020 DE 102020118967
(43) Veröffentlichungstag der Anmeldung: 19.01.2022
(73) Patentinhaber: Clinomic GmbH, 52066 Aachen (DE)
(72) Erfinder: Peine, Arne, 52066 Aachen (DE); Martin, Lukas, 52072 Aachen (DE)
(74) Vertreter: Schmitt-Gaedke, Gernot

(56) Entgegenhaltungen:
- KONSTANTINOS VOUGIOUKAS ET AL: "Video-Driven Speech Reconstruction using Generative Adversarial Networks", ARXIV.ORG, CORNELL UNIVERSITY LIBRARY, 201 OLIN LIBRARY CORNELL UNIVERSITY ITHACA, NY 14853, 14. Juni 2019 (2019-06-14), XP081381809,
- KUMAR YAMAN ET AL: "MyLipper: A Personalized System for Speech Reconstruction using Multi-view Visual Feeds", 2018 IEEE INTERNATIONAL SYMPOSIUM ON MULTIMEDIA (ISM), IEEE, 10. Dezember 2018 (2018-12-10), Seiten 159-166, XP033494089, DOI: 10.1109/ISM.2018.00-19 [gefunden am 2019-01-04]
- YAMAN KUMAR ET AL: "Harnessing AI for Speech Reconstruction using Multi-view Silent Video Feed", ARXIV.ORG, CORNELL UNIVERSITY LIBRARY, 201 OLIN LIBRARY CORNELL UNIVERSITY ITHACA, NY 14853, 2. Juli 2018 (2018-07-02), XP081182690, DOI: 10.1145/3240508.3241911

## Beschreibung

### Technisches Gebiet

Die Erfindung betrifft ein Verfahren zur Bereitstellung wenigstens einer Funktionskomponente für ein automatisches Lippenlesen sowie ein Verfahren zum automatischen Lippenlesen mittels der Funktionskomponente. Darüber hinaus betrifft die Erfindung ein System und ein Computerprogramm.

### Stand der Technik

Aus dem Stand der Technik sind Verfahren zum automatischen Lippenlesen bekannt, bei welchen mittels eines neuronalen Netzes aus einer Videoaufzeichnung einer Mundbewegung unmittelbar das Gesprochene erkannt wird. Derartige Verfahren sind somit einstufig ausgeführt. Darüber hinaus ist es auch bekannt, auf der Grundlage von Audioaufzeichnungen eine Spracherkennung, ebenfalls einstufig, durchzuführen.

Ein weiteres Verfahren ist aus der Veröffentlichung "Vougioukas et al., Video-Driven Speech Reconstruction using Generative Adversarial Networks', arXiv: 1906.06301 v1, 2019" bekannt.

Ein Verfahren zum automatischen Lippenlesen ist bspw. aus der US 8,442,820 B2 bekannt. Weitere herkömmliche Verfahren zum Lippenlesen sind u.a. bekannt aus "Assael et al., LipNet: End-to-End Sentence-level Lipreading, arXiv: 1611.01599, 2016" und "J. S. Chung, A. Senior, O. Vinyals, and A. Zisserman, "Lip reading sentences in the wild," in 2017 IEEE Conference on Computer Vision and Pattern Recognition (CVPR). IEEE, 2017, pp. 3444-3453."

### Aufgabe der Erfindung

Der vorliegenden Erfindung liegt die Aufgabe zugrunde, dem Stand der Technik eine Bereicherung, Verbesserung oder Alternative zur Verfügung zu stellen.

### Lösung und Vorteile der Erfindung

Die voranstehende Aufgabe wird durch die Patentansprüche gelöst. Weitere Merkmale der Erfindung ergeben sich aus der Beschreibung und den Zeichnungen. Dabei gelten Merkmale, die im Zusammenhang mit dem erfindungsgemäßen Verfahren beschrieben sind, auch im Zusammenhang mit dem weiteren Verfahren, dem erfindungsgemäßen System sowie dem erfindungsgemäßen Computerprogramm, und jeweils umgekehrt.

Es kann zunächst zur Bereitstellung wenigstens einer Funktionskomponente, insbesondere für ein automatisches Lippenlesen, ein Verfahren vorgesehen sein. Das Verfahren kann in anderen Worten dazu dienen, die wenigstens eine Funktionskomponente jeweils für eine Verwendung beim automatischen Lippenlesen bereitzustellen, vorzugsweise derart, dass die jeweilige Funktionskomponente zumindest einen Teil der Funktionen zur Verfügung stellt, um das automatische Lippenlesen zu ermöglichen.

Hierbei ist es vorgesehen, dass die nachfolgenden Schritte durchgeführt werden, vorzugsweise nacheinander in der angegebenen Reihenfolge, wobei die Schritte ggf. auch wiederholt durchgeführt werden können:
- Bereitstellen wenigstens einer (vorteilhafterweise digitalen) Aufzeichnung, welche zumindest eine Audioinformation über Gesprochenes eines (menschlichen) Sprechers und eine Bildinformation über eine Mundbewegung des Sprechers umfasst,
- Durchführen eines Trainings eines Bildauswertemittels, vorzugsweise um das antrainierte Bildauswertemittel als die (oder eine der) Funktionskomponente(n) bereitzustellen, wobei die Bildinformation für eine Eingabe des Bildauswertemittels und die Audioinformation als eine Lernvorgabe für eine Ausgabe des Bildauswertemittels verwendet werden kann, um bevorzugt das Bildauswertemittel zur künstlichen Erzeugung des Gesprochenen bei einer lautlosen Mundbewegung zu trainieren.

Auf diese Weise kann das Bildauswertemittel vorteilhafterweise als eine Funktionskomponente bereitgestellt und dafür angelernt werden, aus der Bildinformation die Audioinformation zu ermitteln. In anderen Worten kann das Bildauswertemittel dafür trainiert werden, um aus einer visuellen Aufzeichnung der Mundbewegung die zugehörigen Sprachlaute zu erzeugen. Damit kann ggf. auch der Vorteil erzielt werden, dass das Bildauswertemittel als eine Stufe eines mehrstufigen Verfahrens dafür ausgeführt ist, mit großer Zuverlässigkeit ein Lippenlesen zu unterstützen. Im Gegensatz zu herkömmlichen Verfahren wird hierbei zum Lippenlesen zunächst die Audioinformation generiert. Ferner kann das Training speziell darauf ausgerichtet sein, das Bildauswertemittel zur künstlichen Erzeugung des Gesprochenen bei einer lautlosen Mundbewegung anzutrainieren, d.h. ohne Verwendung einer Lautsprache als Eingabe. Dies unterscheidet das erfindungsgemäße Verfahren dann von herkömmlichen Verfahren zur Spracherkennung, bei welchen die Mundbewegung lediglich unterstützend zusätzlich zur Lautsprache als Eingabe verwendet wird.

Unter einer Aufzeichnung wird insbesondere eine digitale Aufzeichnung verstanden, welche die Audioinformation als eine akustische Information (wie eine Audiodatei) und die Bildinformation als eine visuelle Information (ohne Audio, also bspw. eine Bildabfolge) aufweisen kann.

Die Bildinformation kann als eine Information über bewegte Bilder, also ein Video, ausgeführt sein. Dabei kann die Bildinformation tonlos sein, also keine Audioinformation umfassen. Hingegen kann die Audioinformation (ausschließlich) Ton und damit eine akustische Information über das Gesprochene und somit nur die Lautsprache umfassen, also keine Bildinformation umfassen. Bspw. kann die Aufzeichnung durch eine herkömmliche Video- und gleichzeitige Tonaufzeichnung des Gesichts des Sprechers ermittelt werden, wobei dann die Bild- und Toninformationen daraus separiert werden, um die Bild- und Audioinformation zu erhalten. Der Sprecher kann für das Training eine Lautsprache verwenden, welche dann automatisch durch eine Mundbewegung des Sprechers begleitet wird, welche einer tonlosen Mundbewegung ohne Lautsprache zumindest nahezu entsprechen kann.

Das Training kann auch als Anlernen bezeichnet werden, da durch das Training und insbesondere mittels maschinellen Lernens das Bildauswertemittel dafür angelernt wird, für die vorgegebenen Bildinformationen als Eingabe die (als Lernvorgabe) vorgegebenen Audioinformationen als Ausgabe auszugeben. Dies ermöglicht es, das antrainierte (bzw. angelernte) Bildauswertemittel auch mit einer solchen Bildinformation als Eingabe anzuwenden, welche von den konkret beim Training verwendeten Bildinformationen abweicht. Diese Bildinformation muss dabei auch nicht Teil einer Aufzeichnung sein, welche bereits die zughörige Audioinformation enthält. Damit kann auch die Bildinformation über eine lautlose Mundbewegung des Sprechers als Eingabe verwendet werden, bei welcher das Gesprochene des Sprechers lediglich als lautlos Gesprochenes vorliegt. Die Ausgabe des antrainierten Bildauswertemittels kann dann als Audioinformation verwendet werden, welche als künstliches Erzeugnis des Gesprochenen der Bildinformation aufgefasst werden kann.

Im Rahmen der Erfindung kann unter einer lautlosen Mundbewegung stets eine solche Mundbewegung verstanden werden, welche ausschließlich der Ausgabe lautlos Gesprochenen - also im Wesentlichen lautloser und lediglich durch die Mundbewegung visuell wahrnehmbarer Sprache - dient. Die lautlose Mundbewegung wird dabei durch den Sprecher ohne (deutlich wahrnehmbare) akustische Lautsprache verwendet. Hingegen kann beim Training die Aufzeichnung zumindest teilweise die Bild- und Audioinformation über visuell und gleichzeitig auch akustisch wahrnehmbares Gesprochenes umfassen, sodass hierbei die Mundbewegung einer sowohl visuell als auch akustisch wahrnehmbaren Sprache verwendet wird. Unter einer Mundbewegung kann eine Bewegung des Gesichts, der Lippen und/oder der Zunge verstanden werden.

Das beschriebene Training hat den Vorteil, dass das Bildauswertemittel dafür antrainiert (d. h. angelernt) wird, aus der visuellen Aufzeichnung der Mundbewegung und ggf. ohne verfügbare akustische Informationen über das Gesprochene die akustische Information zu schätzen. Im Gegensatz zu herkömmlichen Verfahren ist es dann nicht erforderlich, dass eine akustische Information über das Gesprochene für eine Spracherkennung benötigt wird. Bekannte Verfahren verwendet dabei oft die Mundbewegung nur dafür, eine audiobasierte Spracherkennung zu verbessern. Dagegen kann gemäß der vorliegenden Erfindung auf eine akustische Information über das Gesprochene, also die Lautsprache, ggf. ganz verzichtet werden, und stattdessen die akustische Information über das Bildauswertemittel anhand der Mundbewegung (also der Bildinformation) geschätzt werden. Dies ermöglicht bei einer stufigen Ausführung der Verfahrens auch den Einsatz von herkömmlichen Spracherkennungsmodulen dann, wenn die akustische Information nicht verfügbar oder vorhanden ist. Bspw. ist der Einsatz der bereitgestellten Funktionskomponente für Patienten einer Intensivstation vorteilhaft, welche zwar die Lippen bewegen, jedoch aufgrund der medizinischen Behandlung nicht zum Sprechen in der Lage sind.

Das Bildauswertemittel kann auch als ein Funktionsmodul aufgefasst werden, welches modular und somit flexibel für verschiedene Spracherkennungsmethoden und/oder Methoden des Lippenlesens geeignet ist. So ist es möglich, dass die Ausgabe des Bildauswertemittels für ein herkömmliches Spracherkennungsmodul eingesetzt wird, wie es bspw. aus "Povey et al., The Kaldi Speech Recognition Toolkit, 2011, IEEE Signal Processing Society" bekannt ist. Auf diese Weise kann das Gesprochene bspw. in Textform bereitgestellt werden. Auch weitere Verwendungen sind denkbar, wie z. B. eine Sprachsynthese aus der Ausgabe des Bildauswertemittels, welche dann ggf. akustisch über einen Lautsprecher eines erfindungsgemäßen Systems ausgegeben werden kann.

Ferner können Anwendungen des automatischen Lippenlesen der Veröffentlichung **"**L. Woodhouse, L. Hickson, and B. Dodd, 'Review of visual speech perception by hearing and hearing-impaired people: clinical implications,' International Journal of Language & Communication Disorders, vol. 44, no. 3, pp. 253-270, 2009**"** entnommen werden. Insbesondere im Bereich der Krankenbehandlung z. B. auf einer Intensivstation können medizinische Fachkräfte von dem automatischen (d. h. maschinellen) Lippenlesen profitieren. Sofern die akustische Sprache der Patienten eingeschränkt wird, kann das erfindungsgemäße Verfahren genutzt werden, um dennoch eine Kommunikation mit dem Patienten ohne andere Hilfsmittel (wie die Handschrift) zu ermöglichen.

### Vorteilhafte Ausgestaltungen der Erfindung

In einer weiteren Möglichkeit kann vorgesehen sein, dass das Training gemäß einem maschinellen Lernen erfolgt, wobei vorzugsweise die Aufzeichnung zur Bereitstellung von Trainingsdaten für das Training verwendet wird, und bevorzugt die Lernvorgabe als ein Ground Truth der Trainingsdaten ausgeführt ist. Bspw. kann die Bildinformation als Eingabe und die Audioinformation als der Ground Truth verwendet werden. Dabei ist es vorgesehen, dass das Bildauswertemittel als ein neuronales Netz ausgeführt ist. Bei dem Training kann entsprechend eine Gewichtung von Neuronen des neuronalen Netzes antrainiert werden. Das Ergebnis des Trainings wird z. B. in der Form einer Information über diese Gewichtung, wie ein Klassifikator, für eine anschließende Anwendung bereitgestellt.

Ferner kann im Rahmen der Erfindung vorgesehen sein, dass die Audioinformation dadurch als die Lernvorgabe verwendet wird, dass Sprachmerkmale aus einer Transformation der Audioinformation ermittelt werden, wobei die Sprachmerkmale als MFCC ausgeführt sein können, sodass bevorzugt das Bildauswertemittel zur Verwendung als ein MFCC Schätzer (engl. MFCC Estimator) antrainiert wird. MFCC steht hierbei für "Mel Frequency Cepstral Coefficients" (deutsch: Mel-Frequenz-Cepstrum-Koeffizienten), welche im Bereich der automatischen Spracherkennung häufig Verwendung finden. Die MFCC werden bspw. durch wenigstens einen der nachfolgenden Schritte berechnet:
- Durchführen einer Fensterung der Audioinformation,
- Durchführen einer Frequenzanalyse, insbesondere einer Fouriertransformation, der gefensterten Audioinformation,
- Erzeugen eines Betragsspektrums aus dem Ergebnis der Frequenzanalyse,
- Durchführen einer Logarithmierung des Betragsspektrums,
- Durchführen einer Reduktion der Anzahl der Frequenzbänder des logarithmierten Betragsspektrums,
- Durchführen einer diskreten Kosinustransformation oder eine Hauptkomponentenanalyse des Ergebnisses der Reduktion.

Es kann möglich sein, dass das Bildauswertemittel als ein Modell zur Schätzung der MFCC aus der Bildinformation antrainiert bzw. ausgeführt ist. Anschließend kann ein weiteres Modell antrainiert werden, welches (insbesondere ausschließlich) von den Geräuschen der Audioinformation abhängig ist, um die Sprache zu erkennen (audiobasierte Spracherkennung). Das weitere Modell kann dabei ein Sprachauswertemittel sein, welches aus der Audioinformation als Eingabe einen Text als Ausgabe produziert, wobei der Text das Gesprochene inhaltlich wiedergeben kann. Es kann möglich sein, dass auch für das Sprachauswertemittel die Audioinformation zunächst in MFCC transformiert wird.

Zudem ist im Rahmen der Erfindung denkbar, dass die Aufzeichnung zusätzlich eine Sprachinformation über das Gesprochene umfasst, und der nachfolgende Schritt durchgeführt wird:
- Durchführen eines weiteren Trainings eines Sprachauswertemittels zur Spracherkennung, wobei die Audioinformation und/oder die Ausgabe des antrainierten Bildauswertemittels für eine Eingabe des Sprachauswertemittels und die Sprachinformation als eine Lernvorgabe für eine Ausgabe des Sprachauswertemittels verwendet werden.

Die Lernvorgabe kann im Sinne eines vordefinierten Ergebnisses oder eines Ground Truths für maschinelles Lernen eine Referenzinformation umfassen, welche konkrete Ausgabe bei einer zugehörigen Eingabe gewünscht ist. Dabei kann die Audioinformation die Lernvorgabe bzw. den Ground Truth für das Bildauswertemittel bilden, und/oder eine Sprachinformation die Lernvorgabe bzw. den Ground Truth für ein Sprachauswertemittel bilden.

Das Training kann bspw. als ein überwachtes Lernen (supervised learning) erfolgen, bei welchem die Lernvorgabe eine Sollausgabe bildet, also den Wert, welchen das Bildauswertemittel bzw. Sprachauswertemittel idealerweise ausgeben soll. Auch ist es denkbar, bestärkendes Lernen (reinforced learning) als Methode für das Training zu verwenden, und anhand der Lernvorgabe die Belohnungsfunktion zu definieren. Ebenso sind weitere Trainingsmethoden denkbar, bei welchen die Lernvorgabe als Vorgabe verstanden wird, welche Ausgabe idealerweise gewünscht ist. Das Training kann grundsätzlich automatisiert erfolgen, sobald die Trainingsdaten bereitgestellt wurden. Die Möglichkeiten zum Training des Bild- und/oder Sprachauswertemittels sind grundsätzlich bekannt.

Die Auswahl und Anzahl der Trainingsdaten für das Training kann je nach gewünschter Zuverlässigkeit und Genauigkeit des automatischen Lippenlesens erfolgen. Vorteilhafterweise kann somit gemäß der Erfindung nicht eine besondere Genauigkeit oder das zu erreichende Ergebnis des Lippenlesens beansprucht werden, sondern lediglich das methodische Vorgehen des Trainings und der Anwendung.

Nach einem ersten Aspekt der Erfindung löst die gestellte Aufgabe ein Verfahren zum automatischen Lippenlesen bei einem Patienten, wobei die nachfolgenden Schritte durchgeführt werden, vorzugsweise nacheinander in der angegebenen Reihenfolge, wobei die Schritte auch wiederholt durchgeführt werden können:
- Bereitstellen wenigstens einer Bildinformation über eine lautlose Mundbewegung des Patienten, nämlich über eine visuell anhand der Mundbewegung erkennbaren und nicht akustischen Sprache des Patienten bei einer Verhinderung des Sprechens des Patienten z. B. aufgrund einer medizinischen Behandlung, wobei die Bildinformation durch eine Kameraaufzeichnung der Mundbewegung ermittelt wird,
- Durchführen einer Anwendung eines antrainierten Bildauswertemittels mit der Bildinformation als eine Eingabe des Bildauswertemittels, um eine Ausgabe des Bildauswertemittels als eine Audioinformation zu verwenden.

Ferner kann der nachfolgende Schritt durchgeführt werden, vorzugsweise nach dem Durchführen der Anwendung des Bildauswertemittels:
- Durchführen einer Anwendung eines Sprachauswertemittels zur (insbesondere akustischen) Spracherkennung mit der Audioinformation (d. h. der Ausgabe des Bildauswertemittels) als eine Eingabe des Sprachauswertemittels, um eine Ausgabe des Sprachauswertemittels als eine Sprachinformation über die Mundbewegung zu verwenden.

Auf diese Weise kann insbesondere der Vorteil erzielt werden, dass eine derartige Spracherkennung für das Lippenlesen verwendet werden kann, welche die Sprachinformation nicht unmittelbar aus der Bildinformation, sondern unmittelbar aus der Audioinformation generieren. Für Sprachauswertemittel zur derartigen Spracherkennung sind eine Vielzahl herkömmlicher Lösungen bekannt, welche durch das Bildauswertemittel für das automatische Lippenlesen adaptiert werden können. Die Sprachinformation umfasst dabei erfindungsgemäß, wie meist bei Spracherkennungsalgorithmen üblich, das Gesprochene aus der Audioinformation in Textform. Das für die Spracherkennung notwendige - im Sinne einer Lautsprache akustisch - Gesprochene wird hierbei allerdings erst durch die Ausgabe des Bildauswertemittels verfügbar, und ist somit künstlich aus der lautlosen Mundbewegung erzeugt.

Erfindungsgemäß ist es vorgesehen, dass das Bildauswertemittel und insbesondere das Sprachauswertemittel als, insbesondere unterschiedliche, (künstliche) neuronale Netze ausgebildet sind, wobei vorzugsweise das Bildauswertemittel und das Sprachauswertemittel sequenziell zum automatischen Lippenlesen angewandt werden. Die Verwendung von neuronalen Netzes bietet eine Möglichkeit, das Bildauswertemittel anhand der Trainingsdaten anzulernen, welche für die gewünschten Ergebnisse passend sind. Damit ist eine flexible Anpassung an gewünschten Anwendungsfelder möglich. Durch die sequentielle Anwendung kann ferner auf ein herkömmlichen Sprachauswertemittel gesetzt werden und/oder das Sprachauswertemittel separat zum Bildauswertemittel durch ein Training angepasst werden. Das Bildauswertemittel ist bspw. als ein Convolutional Neural Networks (CNN) und/oder rekurrentes neuronales Netz (RNN) ausgeführt.

Weiter ist es erfindungsgemäß vorgesehen, dass das Sprachauswertemittel als ein neuronales Netz ausgebildet ist und/oder als ein Spracherkennungsalgorithmus ausgebildet ist, um aus der Audioinformation in der Form einer künstlich durch das Bildauswertemittel generierten akustischen Information die Sprachinformation zu erzeugen. Derartige Algorithmen sind bspw. aus "Ernst Günter Schukat-Talamazzini: Automatische Spracherkennung. Grundlagen, statistische Modelle und effiziente Algorithmen, Vieweg, Braunschweig / Wiesbaden 1995, ISBN 3-528-05492-1." bekannt.

Des Weiteren ist es denkbar, dass das Verfahren als ein zumindest zweistufiges Verfahren zur Spracherkennung, insbesondere einer lautlosen und anhand der lautlosen Mundbewegung visuell wahrnehmbaren Sprache, ausgeführt ist. Dabei kann sequenziell zunächst in einer ersten Stufe durch das Bildauswertemittel die Audioinformation generiert und anschließend in einer zweiten Stufe durch das Sprachauswertemittel anhand der generierten Audioinformation die Sprachinformation generiert wird. Die Zweistufigkeit ist insbesondere darin zu sehen, dass zunächst das Bildauswertemittel und erst drauffolgend, also sequenziell, die Ausgabe des Bildauswertemittel als Eingabe für das Sprachauswertemittel verwendet wird. Das Bildauswertemittel und Sprachauswertemittel sind in anderen Worten miteinander verkettet. Im Gegensatz zu herkömmlichen Ansätzen wird die Analyse der Lippenbewegung damit nicht parallel zur audiobasierten Spracherkennung verwendet. Die audiobasierte Spracherkennung durch das Sprachauswertemittel kann indessen vom Ergebnis der bildbasierten Lippenerkennung des Bildauswertemittels abhängig sein.

Bevorzugt kann im Rahmen der Erfindung vorgesehen sein, dass das Bildauswertemittel zumindest eine Faltungsschicht aufweist, welche unmittelbar die Eingabe des Bildauswertemittels verarbeitet. Entsprechend kann die Eingabe unmittelbar durch die Faltungsschicht gefaltet werden. Bspw. wird auf eine andersartige Verarbeitung wie einer Hauptkomponentenanalyse der Eingabe vor der Faltung verzichtet.

Des Weiteren kann vorgesehen sein, dass das Bildauswertemittel wenigstens eine GRU Einheit aufweist, um die Ausgabe des Bildauswertemittel, insbesondere unmittelbar, zu generieren. Derartige "Gated Recurrent" Einheiten (kurz GRU) sind bspw. in "Xu, Kai & Li, Dawei & Cassimatis, Nick & Wang, Xiaolong, (2018), ,LCANet: End-to-End Lipreading with Cascaded Attention-CTC', arXiv:1803.04988v1" beschrieben. Eine mögliche Ausführung des Bildauswertemittels ist der sogenannte Vanilla Encoder. Das Bildauswertemittel kann ferner als ein "3D-Conv" Encoder ausgebildet sein, welcher zusätzlich dreidimensionale Faltungen verwendet. Diese Ausführungen sind ebenfalls u.a. in der vorgenannten Veröffentlichung beschrieben.

Vorteilhafterweise kann im Rahmen der Erfindung vorgesehen sein, dass das Bildauswertemittel wenigstens zwei oder wenigstens vier Faltungsschichten aufweist. Auch ist es möglich, dass das Bildauswertemittel maximal 2 oder maximal 4 oder maximal 10 Faltungsschichten aufweist. Auf diese Weise kann gewährleistet werden, dass das erfindungsgemäße Verfahren auch auf einer Hardware mit begrenzter Rechenleistung ausgeführt werden kann.

Ein weiterer Vorteil kann im Rahmen der Erfindung erzielt werden, wenn eine Anzahl nacheinander geschalteter Faltungsschichten des Bildauswertemittels im Bereich von 2 bis 10, vorzugsweise 4 bis 6 vorgesehen ist. Damit ist eine ausreichende Genauigkeit des Lippenlesens und gleichzeitig eine Begrenzung der notwendigen Rechenleistung möglich.

Es kann ferner vorgesehen sein, dass die Sprachinformation als eine semantische und/oder inhaltliche Information über das mittels der Mundbewegung des Patienten lautlos Gesprochenen ausgeführt ist. Bspw. handelt es sich hierbei um einen Text, welcher dem Inhalt des Gesprochenen entspricht. Es kann sich dabei um den gleichen Inhalt handeln, welchen die gleiche Mundbewegung bei einer Lautsprache hätte.

Des Weiteren kann vorgesehen sein, dass die Bildinformation zusätzlich zur Mundbewegung noch eine visuelle Aufzeichnung der Gesichtsmimik des Patienten umfasst, vorzugsweise um auch anhand der Gesichtsmimik durch das Bildauswertemittel die Audioinformation als Information über das lautlos Gesprochene des Patienten zu ermitteln. Damit kann die Zuverlässigkeit des Lippenlesens weiter verbessert werden. Die Gesichtsmimik kann hierbei eine für das Gesprochene spezifische Information darstellen.

Ferner ist es denkbar, dass das Bildauswertemittel und/oder das Sprachauswertemittel jeweils als Funktionskomponenten durch ein erfindungsgemäßen Verfahren (zur Bereitstellung wenigstens einer Funktionskomponente) bereitgestellt werden.

Nach einem weiteren Aspekt der Erfindung löst die gestellte Aufgabe ein System mit einer Verarbeitungsvorrichtung zur Ausführung zumindest der Schritte einer Anwendung eines Bildauswertemittels und/oder einer Anwendung eines Sprachauswertemittels eines erfindungsgemäßen Verfahrens zum automatischen Lippenlesen bei einem Patienten. Damit bringt das erfindungsgemäße System die gleichen Vorteile mit sich, wie sie mit Bezug auf die erfindungsgemäßen Verfahren beschrieben sind. Optional kann es vorgesehen sein, dass eine Bildaufzeichnungsvorrichtung zur Bereitstellung der Bildinformation vorgesehen ist. Die Bildaufzeichnungsvorrichtung ist bspw. als eine Kamera ausgebildet, um eine Videoaufzeichnung einer Mundbewegung des Patienten durchzuführen.

Erfindungsgemäß ist eine Ausgabevorrichtung zur akustischen und/oder visuellen Ausgabe der Sprachinformation vorgesehen, bspw. über einen Lautsprecher des erfindungsgemäßen Systems. Zur Ausgabe kann bspw. eine Sprachsynthese der Sprachinformation durchgeführt werden.

Nach einem weiteren Aspekt der Erfindung löst die gestellte Aufgabe ein Computerprogramm, insbesondere Computerprogrammprodukt, umfassend Befehle, die bei der Ausführung des Computerprogramms durch eine Verarbeitungsvorrichtung diese veranlassen, zumindest die Schritte einer Anwendung eines Bildauswertemittels und/oder eines Sprachauswertemittels eines erfindungsgemäßen Verfahren zum automatischen Lippenlesen bei einem Patienten auszuführen. Damit bringt das erfindungsgemäße Computerprogramm die gleichen Vorteile mit sich, wie sie mit Bezug auf die erfindungsgemäßen Verfahren beschrieben sind. Das Computerprogramm kann z. B. in einem nicht-flüchtigen Datenspeicher des erfindungsgemäßen Systems gespeichert sein, um für die Ausführung durch die Verarbeitungsvorrichtung daraus ausgelesen zu werden.

Die Verarbeitungsvorrichtung kann als eine elektronische Komponente des erfindungsgemäßen Systems ausgebildet sein. Ferner kann die Verarbeitungsvorrichtung wenigstens oder genau einen Prozessor, insbesondere Mikrocontroller und/oder Digitalen Signalprozessor und/oder Grafikprozessor, aufweisen. Ferner kann die Verarbeitungsvorrichtung als ein Computer ausgebildet sein. Die Verarbeitungsvorrichtung kann dazu ausgeführt sein, die Befehle eines erfindungsgemäßen Computerprogramms parallel auszuführen. Konkret können bspw. die Anwendung eines Bildauswertemittels und eines Sprachauswertemittels als parallelisierbare Aufgaben durch die Verarbeitungsvorrichtung parallel ausgeführt werden.

### Ausführungsbeispiele

Die Erfindung wird anhand von Ausführungsbeispielen in den Zeichnungen näher erläutert. Dort zeigen jeweils schematisch:
- Fig. 1: Verfahrensschritte eines erfindungsgemäßen Verfahrens, wobei eine Anwendung von Funktionskomponenten gezeigt ist,
- Fig. 2: einen beispielhaften Aufbau eines Bildauswertemittels,
- Fig. 3: Verfahrensschritte eines erfindungsgemäßen Verfahrens, wobei eine Datengenerierung der Trainingsdaten gezeigt ist,
- Fig. 4: Verfahrensschritte eines erfindungsgemäßen Verfahrens, wobei ein Training eines Bildauswertemittels gezeigt ist,
- Fig. 5: eine Struktur einer Aufzeichnung,
- Fig. 6: Teile eines erfindungsgemäßen Systems.

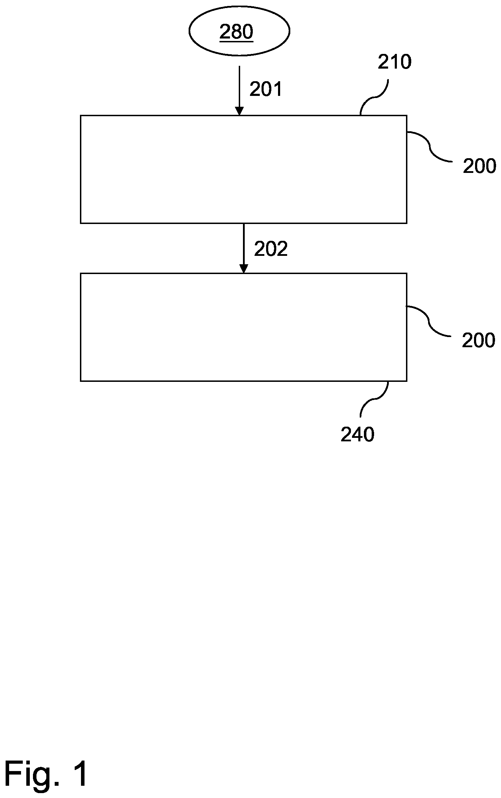

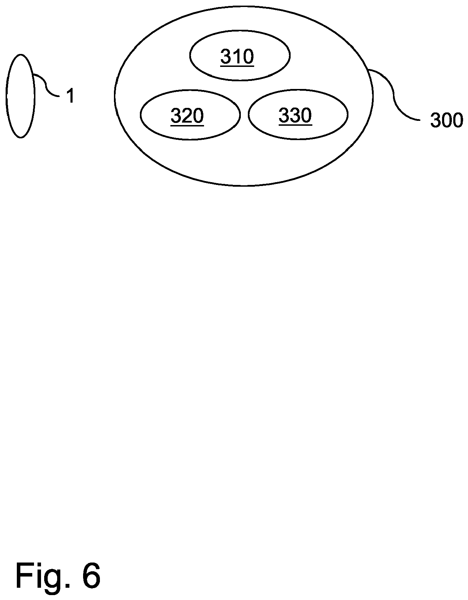

In Figur 1 ist schematisch eine Anwendung von Funktionskomponenten 200 visualisiert. Gemäß einem erfindungsgemäßen Verfahren zum automatischen Lippenlesen bei einem Patienten 1 kann zunächst eine Bildinformation 280 über eine lautlose Mundbewegung des Patienten 1 bereitgestellt werden. Die Bereitstellung erfolgt z. B. durch eine Bildaufzeichnungsvorrichtung 310, welche in Figur 6 als Teil eines erfindungsgemäßen Systems 300 gezeigt ist. Die Bildaufzeichnungsvorrichtung 310 umfasst bspw. eine Kamera, welche die Mundbewegung des Patienten 1 aufzeichnet und als die Bildinformation 280 speichert. Hierzu kann die Bildinformation 280 bspw. mittels einer Datenübertragung an einen Speicher des erfindungsgemäßen Systems 300 übertragen und zwischengespeichert werden. Anschließend kann eine (insbesondere automatische, elektronische) Anwendung eines Bildauswertemittels 210 erfolgen, bei welcher die Bildinformation 280 für eine Eingabe 201 des Bildauswertemittels 210 verwendet wird, um eine Ausgabe 202 des Bildauswertemittels 210 als eine Audioinformation 270 zu verwenden.

Die Anwendung kann z. B. eine digitale Datenverarbeitung umfassen, welche bspw. durch wenigstens einen elektronischen Prozessor des Systems 300 ausgeführt wird. Weiter kann die Ausgabe 202 bspw. eine digitale Ausgabe sein, deren Inhalt als eine Audioinformation im Sinne von MFCC aufgefasst bzw. verwendet wird. Daraufhin kann eine (insbesondere automatische, elektronische) Anwendung eines Sprachauswertemittels 240 zur Spracherkennung mit der Audioinformation 270 für eine Eingabe des Sprachauswertemittels 240 erfolgen, um eine Ausgabe des Sprachauswertemittels 240 als eine Sprachinformation 260 über die Mundbewegung zu verwenden. Auch diese Anwendung kann eine digitale Datenverarbeitung umfassen, welche bspw. durch wenigstens einen elektronischen Prozessor des Systems 300 ausgeführt wird. Die Ausgabe 202 des Bildauswertemittels 210 kann dabei auch direkt als Eingabe für das Sprachauswertemittel 240 verwendet werden, und die Ausgabe des Sprachauswertemittels 240 direkt als Sprachinformation 260 verwendet werden.

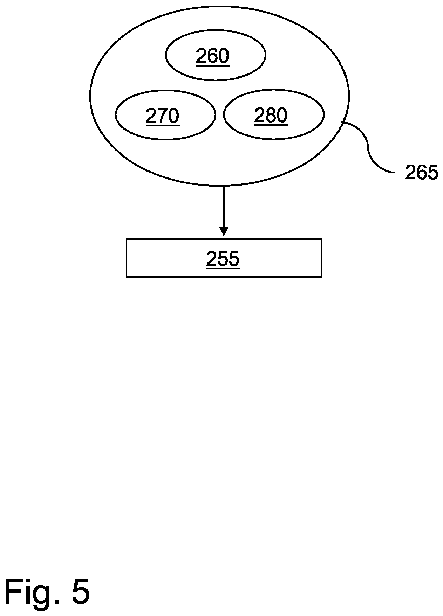

Für die Anwendung in Figur 1 kann als das Bildauswertemittel 210 ein zuvor antrainiertes Bildauswertemittel 210 (wie ein neuronales Netz) verwendet werden. Um das antrainierte Bildauswertemittel 210 zu erhalten, kann zunächst ein (nachfolgend noch näher beschriebenes) Training 255 eines (nicht trainierten) Bildauswertemittels 210 erfolgen. Hierzu kann als Trainingsdaten 230 eine in Figur 5 gezeigte Aufzeichnung 265 verwendet werden. Die Aufzeichnung 265 resultiert z. B. aus einer Video- und Audioaufzeichnung einer Mundbewegung eines Sprechers und der zugehörigen Lautsprache. Die Lautsprache wird dabei nur für das Training benötigt und kann ggf. auch manuell ergänzt werden.

Das Durchführen des Trainings 255 des Bildauswertemittels 210 kann erfolgen, um das auf diese Weise antrainierte Bildauswertemittel 210 als die Funktionskomponente 200 bereitzustellen, wobei eine Bildinformation 280 der Trainingsdaten 230 für eine Eingabe 201 des Bildauswertemittels 210 und eine Audioinformation 270 der Trainingsdaten 230 als eine Lernvorgabe für eine Ausgabe 202 des Bildauswertemittels 210 verwendet werden, um das Bildauswertemittel 210 zur künstlichen Erzeugung des Gesprochenen bei einer lautlosen Mundbewegung zu trainieren. Das Bildauswertemittel 210 kann entsprechend spezifisch dafür antrainiert und somit optimiert sein, eine künstliche Erzeugung des Gesprochenen bei einer - lautlosen - Mundbewegung, jedoch nicht bei einer Lautsprache, und/oder im medizinischen Kontext durchzuführen. Dies kann durch die Auswahl der Trainingsdaten 230 erfolgen, bei welcher die Trainingsdaten 230 lautlose Sprache und/oder Sprache mit Inhalten im medizinischen Kontext umfassen. Die Sprachinhalte der Trainingsdaten 230 umfassen insbesondere Patientenwünsche und/oder -angaben, welche häufig im Rahmen einer solchen medizinischen Behandlung auftreten, bei welcher die Lautsprache der Patienten eingeschränkt und/oder verhindert wird.

Die Audioinformation 270 und Bildinformation 280 der Aufzeichnung 265 bzw. der Trainingsdaten 230 können einander zugeordnet sein, da ggf. beide Information gleichzeitig aufgezeichnet werden. Hierzu wird bspw. eine gleichzeitige Video- und Audioaufzeichnung eines Sprechvorgangs des Sprechers 1 durchgeführt. Die Bildinformation 280 kann entsprechend eine Videoaufzeichnung der Mundbewegung bei diesem Sprechvorgang und die Audioinformation 270 eine Tonaufzeichnung 265 des Sprechvorgangs während der Mundbewegung umfassen. Ferner ist es denkbar, dass diese Information noch mit einer Sprachinformation 260 ergänzt wird, welche den sprachlichen Inhalt des Gesprochenen während des Sprechvorgangs umfasst. Diese Sprachinformation 260 kann z. B. manuell in Textform hinzugefügt werden, und somit bspw. als digitale Daten bereitgestellt werden. Auf diese Weise können verschiedene Aufzeichnungen 265 für unterschiedliche gesprochene Wörter oder Sätze oder dergleichen erstellt werden. Wie in Figur 5 dargestellt ist, kann die Aufzeichnung 265 mit der für das Training vorgesehenen Audio- Bild- und ggf. der Sprachinformation 260 die Trainingsdaten 230 in der Form eines gemeinsamen Trainingsdatensatzes 230 bilden. Im Gegensatz zum Anwendungsfall können bei Training also die Audio- Bild- und ggf. auch die Sprachinformation 260 vorgegebene und z. B. manuell speziell für das Training erstellte Trainingsdaten sein.

Neben dieser manuellen Erstellung können auch frei verfügbare Datensätze als Aufzeichnung 265 bzw. Trainingsdaten 230 verwendet werden. Beispielhaft soll hier auf die Veröffentlichung von "Colasito et al., Correlated lip motion and voice audio data, Journal Data in Brief, Elsevier, Volume 21, pp. 856-860" und "M. Cooke, J. Barker, S. Cunningham, and X. Shao, 'An audiovisual corpus for speech perception and automatic speech recognition,' The Journal of the Acoustical Society of America, vol. 120, no. 5, pp. 2421-2424, 2006" verwiesen werden.

Das automatische Lippenlesen kann konkret das visuelle Erkennen des Gesprochenen über die Lippenbewegungen des Sprechers 1 bezeichnen. Das Gesprochene kann im Rahmen des Trainings 255 insbesondere eine tatsächlich akustisch ausgesprochene Sprache betreffen. Es ist beim Training 255 also vorteilhaft, wenn die Audioinformation 270 die akustische Information über das Gesprochene aufweist, welches bei der in der Bildinformation 280 aufgezeichneten Mundbewegung tatsächlich akustisch ausgesprochen wurde. Im Gegensatz dazu kann das antrainierte Bildauswertemittel 210 auch dann zum Lippenlesen verwendet werden, wenn die akustische Information über das Gesprochene nicht verfügbar ist, z. B. bei der Verwendung von Gebärdensprache oder bei einer medizinischen Behandlung, die nicht die Mundbewegung aber die akustische Aussprache verhindert. In diesem Falle wird das Bildauswertemittel 210 genutzt, um die Audioinformation 270 als eine Schätzung des (nicht tatsächlich verfügbaren) Gesprochenen zu erhalten (welches für die Mundbewegung plausibel ist).

Das Training 255 kann auf einer Aufzeichnung 265 eines oder mehrerer Sprecher 1 basieren. Zunächst kann es vorgesehen sein, dass die Bildinformation 280 als Video, z. B. mit Graustufenbildern einer Größe von 360x288 Pixel und 1kbit/s, aufgezeichnet werden. Aus dieser Bildinformation 280 kann anschließend der Bereich der Mundbewegung ausgeschnitten und ggf. normalisiert werden. Das Ergebnis kann als ein Array z. B. mit den Dimensionen (F, W, H) = (75x50x100) dargestellt werden, wobei F die Anzahl der Frames, W die Bildbreite und H die Bildhöhe bezeichnet.

Das Sprachauswertemittel 240 kann als ein herkömmliches Spracherkennungsprogramm ausgeführt sein. Weiter kann das Sprachauswertemittel 240 als ein Audiomodell ausgeführt sein, welches aus den berechneten MFCC, also dem Ergebnis des Bildauswertemittels 210, als Ausgabe 202 einen Text bzw. Satz bezogen auf diese MFCC ausgibt.

Das Bildauswertemittel 210 und/oder das Sprachauswertemittel 240 können jeweils LSTM (Long Short-Term Memory) Einheiten verwenden, wie es u. a. in "J. S. Chung, A. Senior, O. Vinyals, and A. Zisserman, ,Lip reading sentences in the wild,' in 2017 IEEE Conference on Computer Vision and Pattern Recognition (CVPR). IEEE, 2017, pp. 3444-3453" beschrieben ist. Die LSTM Einheiten können dazu ausgeführt sein, den Einfluss von Eingaben 201 aus früheren Zeitschritten auf dem aktuellen vorhergesagten Zeitschritt zu erfassen. Außerdem kann hierbei die Verwendung von bidirektionalen Schichten hinzukommen. Das bedeutet, dass für die Vorhersage des aktuellen Zeitschritt die LSTM Einheit die Möglichkeit hat, Eingaben 201 zu berücksichtigen, die auf vorherige und weitere Zeitschritte basieren.

Das Sprachauswertemittel 240 kann als Eingabe 201 die Audioinformation 270, insbesondere als MFCC, voraussetzen. Dann kann es notwendig sein, zunächst die Audioinformation 270 bzw. die MFCC zu schätzen, da diese zwar bei der Aufzeichnung 265 für das Training, jedoch nicht bei der Anwendung verfügbar sind (sondern nur die Bildinformation 280). Für das Schätzen der Audioinformation 270 bzw. MFCC kommen verschiedene Ausbildungen des Bildauswertemittels 210 in Frage. Das Bildauswertemittel 210 kann entsprechend als ein MFCC Schätzer verstanden werden. Das Bildauswertemittel 210 kann ferner zu diesem Zweck einen Merkmals-Encoder (feature encoder) und/oder ein künstliches neuronales Netz wie ein RNN und/oder CNN aufweisen, um die Ausgabe 202 zu produzieren.

Es kann ferner ein Decoder vorgesehen sein, um anhand des Ergebnisses aus den beiden kaskadierenden Modellen (also aus dem Bild- und Sprachauswertemittel 240) eine zusätzliche Auswertung vorzunehmen. Hierbei kann z. B. anhand eines Wörterbuchs eine Plausibilität der Ausgabe des Sprachauswertemittels 240 überprüft werden. Offensichtliche sprachliche Fehler können ferner korrigiert werden. Bei Fehlern kann ein fehlerhaftes Wort der Sprachinformation 260 mit einem anderen Wort ersetzt werden.

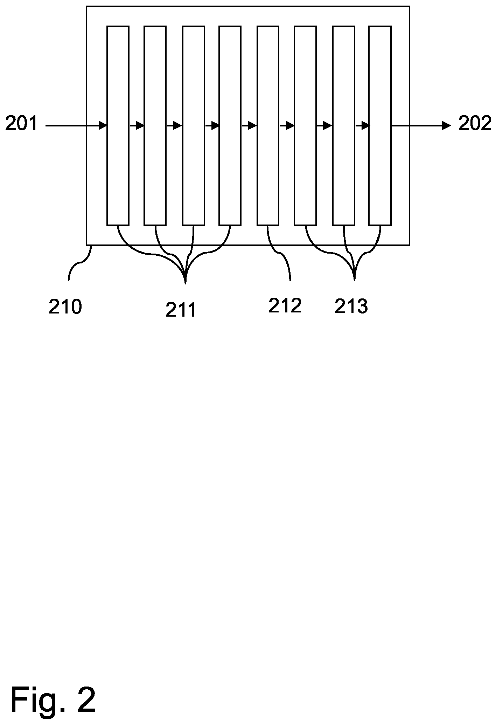

In Figur 2 ist eine Anwendung eines Bildauswertemittels 210 mit der Bildinformation 280 für die Eingabe 201 des Bildauswertemittel 210 veranschaulicht. Die Eingabe 201 und/oder die Bildinformation 280 ist bspw. mit einer dreidimensionalen Datenstruktur ausgeführt. Bspw. kann für die Bildinformation 280 bzw. Eingabe 201 das Format (F, W, H) = (75, 50, 100) gewählt sein, bei welchem F die Anzahl der Frames, W die Bildbreite und H die Bildhöhe angibt. Nach der Durchführung dieser Anwendung kann eine Ausgabe 202 des Bildauswertemittels 210 als eine Audioinformation 270 verwendet werden. Die Ausgabe 202 bzw. Audioinformation 270 kann eine zweidimensionale Datenstruktur aufweisen, und z. B. als Audiosignal oder MFCC vorliegen. Es hat sich darüber hinaus als vorteilhaft herausgestellt, die nachfolgend näher beschriebene Architektur zu verwenden. Zunächst können 4 Faltungsschichten 211 aufeinanderfolgend die Eingabe 201 verarbeiten. Jede der Faltungsschichten 211 kann z. B. mit einer Filterzahl F = 64 parametrisiert sein. F ist hierbei die Anzahl der Filter, welche der Anzahl der Neuronen in der Faltungsschicht 211 entsprechen kann, die sich mit der gleichen Region im Eingang verbinden. Dieser Parameter F kann ferner die Anzahl der Kanäle (Feature-Maps) im Ausgang der Faltungsschicht 211 bestimmen. Somit kann F die Dimensionalität im Ausgangsraum angeben, also die Anzahl der Ausgangsfilter der Faltung. Darüber hinaus kann jede der Faltungsschichten 211 mit einer Filtergröße (Kernel-Größe) K = (5,3,3) parametrisiert sein. K kann hierbei die Tiefe, Höhe und Breite des dreidimensionalen Faltungsfensters angeben. Dieser Parameter definiert somit die Größe der lokalen Regionen, mit denen sich die Neuronen im Eingang verbinden. Ferner können die Faltungsschichten 211 mit einem Schrittparameter (Strides) S = (1,2,2) parametrisiert sein. S gibt hierbei die Schrittweite für das Durchlaufen der Eingabe in drei Dimensionen an. Dies kann als Vektor [a b c] mit drei positiven ganzen Zahlen angegeben werden, wobei a die vertikale Schrittweite, b die horizontale Schrittweite und c die Schrittweite entlang der Tiefe sein kann. Nach den Faltungsschichten 211 kann eine Abflachungsschicht 212 (engl. flattenLayer oder Flattening) vorgesehen sein, um die räumlichen Dimensionen der Ausgabe der Faltungsschichten 211 in eine gewünschte Kanaldimension der nachfolgenden Schichten zu übertragen. Die nachfolgenden Schichten umfassen z. B. die dargestellten GRU Einheiten 213, deren letzter Ausgang die Ausgabe 202 liefert. Die GRU-Einheiten 213 sind jeweils als sogenannte Gated recurrent units ausgebildet, und stellen somit einen Gating-Mechanismus für das rekurrente neuronale Netz dar. Die GRU Einheiten 213 bieten die bekannte GRU-Operation, um es einem Netzwerk zu ermöglichen, Abhängigkeiten zwischen Zeitschritten in Zeitreihen und Sequenzdaten zu lernen. Die auf diese Weise gebildete Bildauswertemittel 210 kann auch als Video-nach-MFCC-Modell bezeichnet werden, da für die Eingabe 201 die Bildinformation 280 und die Ausgabe 202 als Audioinformation 270 verwendet werden kann.

Die in Figur 2 dargestellte Architektur kann den Vorteil haben, dass durch die Faltungsschichten 211 eine visuelle Kodierung stattfindet, sodass die Anforderungen an die Bildinformationen 280 reduziert werden. Würde bspw. anstelle der Faltungsschichten 211 direkt am Eingang eine PCA (Hauptkomponentenanalyse) verwendet werden, so würde dies eine aufwendige Anpassung der Bildinformationen 280 erforderlich machen. Bspw. müssten die Lippen des Patienten 1 in den Bildinformationen 280 stets an der gleichen Position sein. Dies kann bei der beschrieben Architektur vermieden werden. Darüber hinaus kann durch die geringe Größe der Filter der Faltungsschichten 211 der Verarbeitungsaufwand verringert werden. Auch die Verwendung eines Sprachmodells kann zudem vorgesehen sein.

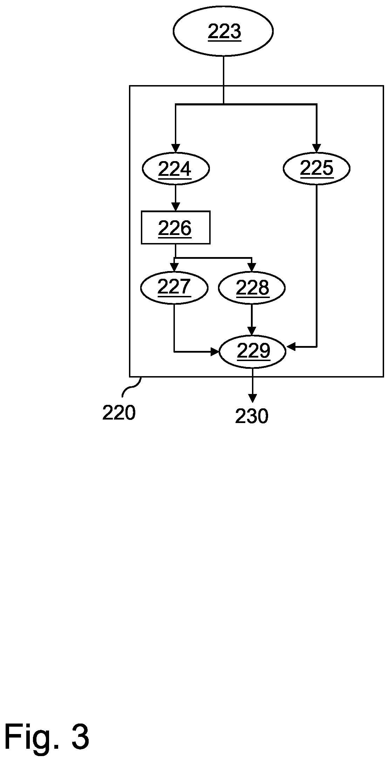

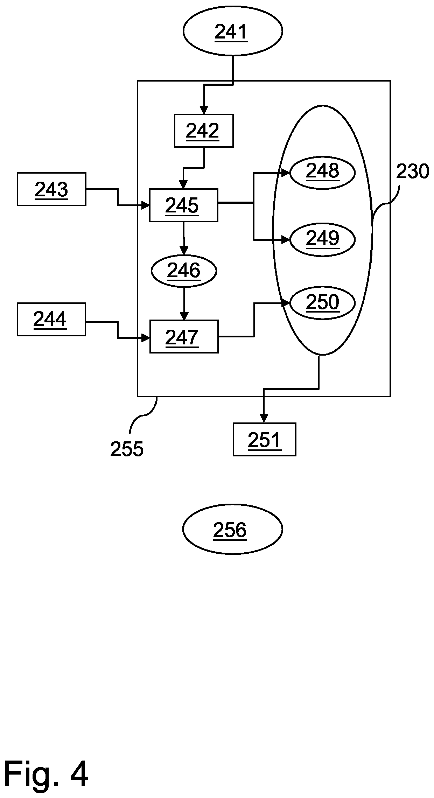

In Figur 3 und 4 sind eine mögliche Ausführung von Verfahrensschritten gezeigt, um wenigstens eine Funktionskomponente 200 für ein automatisches Lippenlesen bereitzustellen. Konkret können hierzu die in Figur 3 gezeigten Verfahrensschritte zur Erstellung von Trainingsdaten 230 und die in Figur 4 gezeigten Verfahrensschritte zur Durchführung eines Trainings 255 anhand der Trainingsdaten 230 ausgeführt werden.

Zur Generierung der Trainingsdaten 230 kann eine Datengenerierungseinheit 220 (in der Form eines Computerprogramms) vorgesehen sein. Zunächst kann gemäß einem ersten Schritt 223 ein Datensatz bereitgestellt werden, welcher eine Aufzeichnung 265 eines Sprechers 1 mit einer Audioinformation 270 über das Gesprochene und eine Bildinformation 280 über die zugehörige Mundbewegung des Sprechers 1 umfasst. Ferner kann der Datensatz die zugehörige Labels, also bspw. eine vordefinierte Sprachinformation 260 mit dem Inhalt des Gesprochenen, umfassen. Es handelt sich bei dem Datensatz um die verwendeten Rohdaten eines Sprechers 1, wobei die Labels über den Sprachinhalt ggf. manuell hinzugefügt werden können. Anschließend kann gemäß der Schritte 224 und 225 eine Trennung der Bild- und Audioinformationen erfolgen. Bei dem Schritt 224 wird entsprechend die Bildinformation 280 aus der Aufzeichnung und bei dem Schritt 225 die Audioinformation 270 aus der Aufzeichnung extrahiert. Gemäß dem Schritt 226 kann optional eine Vorverarbeitung der Bildinformation 280 erfolgen (z. B. ein Zuschnitt oder ein Padding). Anschließend können gemäß dem Schritt 227 die Lippen in der Bildinformation 280 zugeschnitten, und gemäß dem Schritt 228 vordefinierte Landmarken im Gesicht in der Bildinformation 280 identifiziert werden. Im Schritt 229 werden die ausgeschnittenen Frames und Landmarken produziert und wieder mit dem rohen Audiostrom der Audioinformation 270 verbunden, um die Trainingsdaten 230 zu erhalten.

Anschließend kann das Training 255 eines Bildauswertemittels 210 anhand der Trainingsdaten 230 erfolgen. Dieser Lernprozess lässt sich wie folgt zusammenfassen: Zunächst können im Schritt 241 die Audioinformation 270 und Bildinformation 280 von der Datengenerierungseinheit 220 bereitgestellt und im Schritt 242 z. B. von einem Datenspeicher ausgelesen werden. Die Bildinformation 280 kann dabei als eine Sequenz aufgefasst werden. Dabei kann von der Datengenerierungseinheit 220 gemäß Schritt 243 eine Sequenzlänge bereitgestellt werden, auf deren Grundlage die Sequenz beschnitten oder aufgefüllt wird. Diese verarbeitete Sequenz kann dann gemäß Schritt 245 in einen ersten Teil 248, nämlich Training Frames, und einen zweiten Teil 249, nämlich Trainings-Landmarken, der Trainingsdaten 230 aufgeteilt werden. Gemäß dem Schritt 246 können die Audio-Wellenformen der Audioinformation 270 fortgesetzt werden und gemäß Schritt 247 eine Audio-Feature-Extraktion basierend auf vordefinierten Konfigurationen 244 ausgeführt werden. Auf diese Weise werden als dritter Teil 250 der Trainingsdaten 230 die Audio-Merkmale aus der Audioinformation 270 generiert. Daraus wird schließlich das Modell 251 gebildet, und somit das Training anhand der Trainingsdaten 230 durchgeführt. Bspw. können dabei die Teile 248 und 249 als die Eingabe 201 des Bildauswertemittels 210 und der Teil 250 als die Lernvorgabe verwendet werden. Anschließend kann optional ein weiteres Training 256 des Sprachauswertemittel 240 stattfinden, wobei hierzu ggf. die Ausgabe 202 eines trainierten Bildauswertemittels 210 und die Sprachinformation 260 als Trainingsdaten für das weitere Training 256 verwendet wird.

In Figur 6 ist schematisch ein erfindungsgemäßes System 300 dargestellt. Das System 300 kann eine Bildaufzeichnungsvorrichtung 310, eine Ausgabevorrichtung 320 zur physischen Ausgabe der Sprachinformation 260 bei der Anwendung des Sprachauswertemittels 240 und eine Verarbeitungsvorrichtung 330 zur Ausführung von Verfahrensschritten des erfindungsgemäßen Verfahrens aufweisen. Das System 300 kann als ein mobiles und/oder medizintechnisches Gerät für die Anwendung im Krankenhaus und/oder bei Patienten ausgeführt sein. Damit kann auch eine spezifisch für diese Anwendung angepasste Ausbildung des Systems 300 einhergehen. Bspw. weist das System 300 ein desinfizierbares Gehäuse auf. Auch kann bei dem System 300 eine redundante Ausführung der Verarbeitungsvorrichtung 330 vorgesehen sein, um eine Ausfallwahrscheinlichkeit zu verringern. Wenn das System 300 mobil ausgeführt ist, kann das System 300 eine Größe und/oder ein Gewicht aufweisen, welche ein Tragen des Systems 300 durch einen einzigen Benutzer ohne Hilfsmittel ermöglicht. Ferner kann ein Tragemittel wie ein Griff und/oder ein Fortbewegungsmittel wie Rollen oder Räder bei dem System 300 vorgesehen sein.

### Bezugszeichenliste

- 1: Sprecher, Patient

- 200: Funktionskomponente
- 201: Eingabe
- 202: Ausgabe
- 210: Bildauswertemittel, erste Funktionskomponente
- 211: Faltungsschicht
- 212: Abflachungsschicht, Flattening
- 213: GRU Einheit

- 220: Datengenerierungseinheit
- 230: Trainingsdaten

- 240: Sprachauswertemittel, zweite Funktionskomponente
- 255: Training
- 256: weiteres Training

- 260: Sprachinformation
- 265: Aufzeichnung
- 270: Audioinformation

- 280: Bildinformation

- 300: System
- 310: Bildaufzeichnungsvorrichtung

- 320: Ausgabevorrichtung
- 330: Verarbeitungsvorrichtung

- 223-229: Schritte zur Datengenerierung
- 241-251: Trainingsschritte

## Patentansprüche

1. Verfahren zum automatischen Lippenlesen bei einem Patienten (1), wobei die nachfolgenden Schritte durchgeführt werden:
- Bereitstellen wenigstens einer Bildinformation (280) über eine lautlose Mundbewegung des Patienten (1), nämlich über eine visuell anhand der Mundbewegung erkennbaren und nicht akustischen Sprache des Patienten (1) bei einer Verhinderung des Sprechens des Patienten (1), wobei die Bildinformation (280) durch eine Kameraaufzeichnung der Mundbewegung ermittelt wird,
- Durchführen einer Anwendung eines antrainierten Bildauswertemittels (210) mit der Bildinformation (280) als eine Eingabe (201) des Bildauswertemittels (210), um eine Ausgabe (202) des Bildauswertemittels (210) als eine Audioinformation (270) zu verwenden, wobei das Bildauswertemittel (210) als ein neuronales Netz ausgebildet ist,
- Durchführen einer Anwendung eines Sprachauswertemittels (240) zur Spracherkennung mit der Audioinformation (270) als eine Eingabe des Sprachauswertemittels (240), um eine Ausgabe des Sprachauswertemittels (240) als eine Sprachinformation (260) über die Mundbewegung zu verwenden, wobei das Sprachauswertemittel (240) als ein neuronales Netz ausgebildet ist und/oder als ein Spracherkennungsalgorithmus ausgebildet ist, um aus der Audioinformation (270) in der Form einer künstlich durch das Bildauswertemittel (210) generierten akustischen Information die Sprachinformation (260) zu erzeugen,
wobei die Sprachinformation (260) ein Gesprochenes aus der Audioinformation (270) in Textform umfasst, wobei eine Ausgabevorrichtung (320) zur akustischen und/oder visuellen Ausgabe der Sprachinformation (260) vorgesehen ist.

2. Verfahren nach Anspruch 1,
***dadurch gekennzeichnet, dass***
das Bildauswertemittel (210) und das Sprachauswertemittel (240) als unterschiedliche neuronale Netze ausgebildet sind, welche sequenziell zum automatischen Lippenlesen angewandt werden.

3. Verfahren nach einem der Ansprüche 1 bis 2,
***dadurch gekennzeichnet, dass***
das Verfahren als ein zumindest zweistufiges Verfahren zur Spracherkennung einer lautlosen und anhand der Mundbewegung visuell wahrnehmbaren Sprache ausgeführt ist, wobei sequentiell zunächst in einer ersten Stufe durch das Bildauswertemittel (210) die Audioinformation (270) generiert und anschließend in einer zweiten Stufe durch das Sprachauswertemittel (240) anhand der generierten Audioinformation (270) die Sprachinformation (260) generiert wird.

4. Verfahren nach einem der Ansprüche 1 bis 3,
***dadurch gekennzeichnet, dass***
das Bildauswertemittel (210) zumindest eine Faltungsschicht (211) aufweist, welche unmittelbar die Eingabe (201) des Bildauswertemittels (210) verarbeitet.

5. Verfahren nach einem der Ansprüche 1 bis 4,
***dadurch gekennzeichnet, dass***
das Bildauswertemittel (210) wenigstens zwei oder wenigstens vier Faltungsschichten (211) aufweist.

6. Verfahren nach einem der Ansprüche 1 bis 5,
***dadurch gekennzeichnet, dass***
das die Anzahl nacheinander geschalteter Faltungsschichten (211) des Bildauswertemittels (210) im Bereich von 2 bis 9, vorzugsweise 3 bis 5 vorgesehen ist.

7. Verfahren nach einem der Ansprüche 1 bis 6,
***dadurch gekennzeichnet, dass***
die Bildinformation (280) zusätzlich zur Mundbewegung noch eine visuelle Aufzeichnung der Gesichtsmimik des Patienten (1) umfasst, um auch anhand der Gesichtsmimik durch das Bildauswertemittel (210) die Audioinformation (270) als Information über das lautlos Gesprochene des Patienten zu ermitteln.

8. System (300) zum automatischen Lippenlesen bei einem Patienten (1), aufweisend:
- eine Bildaufzeichnungsvorrichtung (310) zur Bereitstellung einer Bildinformation (280) über eine lautlose Mundbewegung des Patienten (1),
- eine Verarbeitungsvorrichtung (330) zur Durchführung zumindest der Schritte einer Anwendung eines Bildauswertemittels (210) und eines Sprachauswertemittels (240) eines Verfahrens nach einem der Ansprüche 1 bis 7,
wobei eine Ausgabevorrichtung (320) zur akustischen und/oder visuellen Ausgabe der Sprachinformation (260) vorgesehen ist.

9. Computerprogramm, umfassend Befehle, die bei der Ausführung des Computerprogramms durch eine Verarbeitungsvorrichtung (330) diese veranlassen, zumindest die Schritte einer Anwendung eines Bildauswertemittels (210) und eines Sprachauswertemittels (240) eines Verfahrens nach einem der Ansprüche 1 bis 7 auszuführen.

## Claims

1. Method for automatic lip reading for a patient (1), wherein the following steps are carried out:
- Providing at least an image information (280) about a noiseless mouth movement of a patient (1), namely about a visually recognizable speech of the patient (1) based on the mouth movement and non-acoustic speech of the patient (1), when the patient (1) is prevented from speaking, wherein the image information (280) is determined by making a camera recording of the mouth movement,
- Performing an applying of a trained image evaluation means (210), with the image information (280) as an input (201) of the image evaluation means (210), in order to use an output (202) of the image evaluation means (210) as an audio information (270), wherein the image evaluation means (210) is designed as a neural network,
- Performing an applying of a speech evaluation means (240) for speech recognition using the audio information (270) as an input of the speech evaluation means (240) in order to use an output of the speech evaluation means (240) as a speech information (260) about the mouth movement, wherein the speech evaluation means (240) is designed as a neural network and/or is designed as a speech recognition algorithm to generate the speech information (260) from the audio information (270) in the form of an acoustic information artificially generated by the image evaluation means (210),
wherein the speech information (260) comprises a spoken from the audio information (270) in text form, wherein an output device (320) is provided for outputting the speech information (260) acoustically and/or visually.

2. Method according to claim 1,
***characterised in that***
the image evaluation means (210) and the speech evaluation means (240) are designed as different neural networks, which are sequentially applied for automatic lip reading.

3. Method according to one of claims 1 to 2
***characterised in that***
the method is carried out as an at least two-stage method for speech recognition of a noiseless and based on the mouth movement visually recognizable speech, wherein sequentially firstly the audio information (270) is generated in a first stage by the image evaluation means (210) and the speech information (260) is then generated in a second stage by the speech evaluation means (240) on the basis of the generated audio information(270).

4. Method according to one of claims 1 to 3
***characterised in that***
the image evaluation means (210) comprises at least one convolutional layer, (211) which directly processes the input (201) of the image evaluation means (210).

5. Method according to one of claims 1 to 4
***characterised in that***
the image evaluation means (210) comprises at least two or at least four convolutional layers (211).

6. Method according to one of claims 1 to 5
***characterised in that***
the number of successively connected convolutional layers (211) of the image evaluation means (210) is provided in the range of 2 to 9,
preferably 3 to 5.

7. Method according to one of claims 1 to 6
***characterised in that***
in addition to the mouth movement the image information (280) comprises a visual recording of the facial expression of the patient (1), in order to also determine, by the image evaluation means (210), the audio information (270) as information about the noiseless spoken of the patient (1) on the basis of the facial expression..

8. A system (300) for automatic lip reading of a patient (1), comprising:
- an image recording device (310) for providing image information (280) about a noiseless mouth movement of a patient (1),
- a processing device (330) for performing at least the steps of applying an image evaluation means (210) and a speech evaluation means (240) of a method according to one of claims 1 to 7,
wherein an output device (320) for acoustically and/or visually outputting the speech information (260) is provided.

9. A computer program comprising instructions which, when the computer program is performed by a processing device (330), cause the processing device to perform at least the steps of applying an image evaluation means (210) and a speech evaluation means (240) of a method according to one of claims 1 to 7.

## Revendications

1. Procédé de lecture labiale automatique chez un patient (1), les étapes suivantes étant exécutées :
- Mise à disposition d'au moins une information d'image (280) sur un mouvement silencieux de la bouche du patient (1), à savoir sur une parole du patient (1) non acoustique et reconnaissable visuellement à l'aide du mouvement de la bouche lorsque le patient (1) est empêché de parler ; l'information d'image (280) étant obtenue par un enregistrement du mouvement de la bouche par une caméra,
- Exécution d'une application d'un moyen d'évaluation d'image (210) ayant été entraîné, avec l'information d'image (280) en tant qu'entrée (201) du moyen d'évaluation d'image (210), afin d'utiliser une sortie (202) du moyen d'évaluation d'image (210) comme information audio (270) ; le moyen d'évaluation d'image (210) étant configuré comme un réseau neuronal,
- Exécution d'une application d'un moyen d'évaluation de parole (240) pour obtenir une reconnaissance linguistique avec l'information audio (270) en tant qu'entrée du moyen d'évaluation de parole (240), afin d'utiliser une sortie du moyen d'évaluation de parole (240) comme information de parole (260) sur le mouvement de la bouche ; le moyen d'évaluation de parole (240) étant configuré comme un réseau neuronal et/ou comme un algorithme de reconnaissance linguistique afin de produire l'information de parole (260) à partir de l'information audio (270) sous la forme d'une information acoustique générée artificiellement par le moyen d'évaluation d'image (210) ;
l'information de parole (260) comprenant une parole sous forme textuelle à partir de l'information audio (270) ; un dispositif de sortie (320) étant prévu
pour la sortie acoustique et/ou visuelle de l'information de parole (260).

2. Procédé selon la revendication 1,
***caractérisé en ce que***
le moyen d'évaluation d'image (210) et le moyen d'évaluation de parole (240) sont configurés comme des réseaux neuronaux différents qui sont appliqués de manière séquentielle pour la lecture labiale automatique.

3. Procédé selon l'une des revendications 1 à 2,
***caractérisé en ce que***
le procédé est réalisé en tant que procédé comprenant au moins deux étapes pour la reconnaissance linguistique d'une parole silencieuse et perceptible visuellement à l'aide du mouvement de la bouche ; l'information audio (270) étant générée de manière séquentielle d'abord dans le cadre d'une première étape par le moyen d'évaluation d'image (210), et l'information de parole (260) étant générée consécutivement dans une deuxième étape par le moyen d'évaluation de parole (240) à l'aide de l'information audio générée (270).

4. Procédé selon l'une des revendications 1 à 3,
***caractérisé en ce que***
le moyen d'évaluation d'image (210) présente au moins une couche de convolution (211), laquelle traite directement l'entrée (201) du moyen d'évaluation d'image (210).

5. Procédé selon l'une des revendications 1 à 4,
***caractérisé en ce que***
le moyen d'évaluation d'image (210) présente au moins deux ou au moins quatre couches de convolution (211).

6. Procédé selon l'une des revendications 1 à 5,
***caractérisé en ce que***
le nombre de couches de convolution (211) commutées successivement du moyen d'évaluation d'image (210) est prévu dans une fourchette de 2 à 9, de préférence de 3 à 5.

7. Procédé selon l'une des revendications 1 à 6,
***caractérisé en ce que***
l'information d'image (280), outre le mouvement de la bouche, comprend également un enregistrement visuel de l'expression du visage du patient (1) afin d'obtenir l'information audio (270) également à l'aide de l'expression du visage via le moyen d'évaluation d'image (210) comme information sur la parole prononcée silencieusement par le patient.

8. Système (300) de lecture labiale automatique chez un patient (1), présentant :
- un dispositif d'enregistrement d'image (310) pour la mise à disposition d'une information d'image (280) sur un mouvement silencieux de la bouche du patient (1),
- un dispositif de traitement (330) pour exécuter au moins les étapes d'une application d'un moyen d'évaluation d'image (210) et d'un moyen d'évaluation de parole (240) d'un procédé selon l'une des revendications 1 à 7,
un dispositif de sortie (320) étant prévu pour la sortie acoustique et/ou visuelle de l'information de parole (260).

9. Programme informatique comprenant des instructions qui, lors de l'exécution du programme informatique par un dispositif de traitement (330), amènent ce dernier à exécuter au moins les étapes d'une application d'un moyen d'évaluation d'image (210) et d'un moyen d'évaluation de parole (240) d'un procédé selon l'une des revendications 1 à 7.
